# EUROPEAN PATENT SPECIFICATION

(11) **EP 2 207 312 B1**
(45) Date of publication and mention of the grant of the patent: **18.04.2012**
(21) Application number: 09150131.2
(22) Date of filing: 07.01.2009
(51) Int. Cl.: H04L 12/56

(54) **IED for, and method of engineering, an SA system**
IED für und Verfahren zum Erstellen eines SA-Systems
Dispositif intelligent et procédé pour le développement d'un système SA

(43) Date of publication of application: 14.07.2010
(73) Proprietor: ABB Research Ltd., 8050 Zürich (CH)
(72) Inventor: Werner, Thomas, CH-5404 Baden (CH); Tournier, Jean-Charles, CH-5404 Baden (CH); Richter, Stefan, CH-5400 Baden (CH)
(74) Representative: ABB Patent Attorneys

(56) References cited:
- EP-A- 1 551 137
- WO-A-01/13590
- WO-A-02/084957
- US-A1- 2003 231 627
- MOHAMED RAYEES A B S ED - MUHAMMAD SALMAN YOUSUF ET AL: "Substation Automation Techniques and Future Trends" INNOVATIONS IN INFORMATION TECHNOLOGY, 4TH INTERNATIONAL CONFERENCE ON, IEEE, PI, 18 November 2007 (2007-11-18), pages 412-416, XP031226537 ISBN: 978-1-4244-1840-4
- PAWEAA GEPNER ET AL: "Second Generation Quad-Core Intel Xeon Processors Bring 45 nm Technology and a New Level of Performance to HPC Applications" COMPUTATIONAL SCIENCE Â ICCS 2008; [LECTURE NOTES IN COMPUTER SCIENCE], SPRINGER BERLIN HEIDELBERG, BERLIN, HEIDELBERG, vol. 5101, 25 June 2008 (2008-06-25), pages 417-426, XP019090517 ISBN: 978-3-540-69383-3
- WAHEED A ET AL: "Performance Characterization of a Dual Quad-Core Based Application Oriented Networking System" NETWORKING, ARCHITECTURE, AND STORAGE, 2008. NAS '08. INTERNATIONAL CONFERENCE ON, IEEE, PISCATAWAY, NJ, USA, 12 June 2008 (2008-06-12), pages 295-302, XP031291975 ISBN: 978-0-7695-3187-8

## Description

### FIELD OF THE INVENTION

The invention relates to the field of Substation Automation (SA) systems for substations in high and medium voltage electric power networks.

### BACKGROUND OF THE INVENTION

Substations in high and medium-voltage power networks include primary devices such as electrical cables, lines, bus bars, switches, power transformers and instrument transformers, which are generally arranged in switch yards and/or bays. These primary devices are operated in an automated way via a Substation Automation (SA) system. The SA system comprises secondary devices, among which Intelligent Electronic Devices (IED) are responsible for protection, control and monitoring of the primary devices. Basically, an IED controls actuators of assigned primary devices on the base of signals from assigned sensors for switch or tap changer position, temperature, voltage, current etc., signals from other IEDs, and signals from a supervisory system. Conversely, an IED communicates a state or behaviour of its assigned primary devices, i.e. selected sensor readings, to other IEDs or to the supervisory system.

The secondary devices may be assigned to hierarchical levels, i.e. the station level, the bay level, and the process level, the latter being separated from the bay level by a so-called process interface. IEDs on the station level of the SA system include a supervisory computer or station PC comprising an Operator Work Station (OWS) with a Human-Machine Interface (HMI) and running a Supervisory Control And Data Acquisition (SCADA) software, as well as a gateway for communication with a Network Control Centre (NCC). IEDs on the bay level, also termed bay units or protection and/or control IEDs in what follows, in turn are connected to each other as well as to the IEDs on the station level via an inter-bay or station bus primarily serving the purpose of exchanging commands and status information.

Secondary devices on the process-level comprise sensors for voltage (VT), current (CT) and gas density measurements, contact probes for sensing switch and transformer tap changer positions, and/or actuators (I/O) for changing transformer tap positions, or for controlling switchgear like circuit breakers or disconnectors. Exemplary sensors such as non-conventional current or voltage transformers comprise an Analogue to Digital (AD) converter for sampling of analogue signals, and are connected to the bay units via a dedicated or intra-bay process bus, which can be considered as the process interface replacing the conventional hard-wired process interface. The latter connects conventional current or voltage transformers in the switchyard to the bay level equipment via dedicated copper wires, in which case the analogue signals of the instrument transformers are sampled by the bay units.

A communication standard for communication between the secondary devices of a substation has been introduced by the International Electrotechnical Committee (IEC) as part of the standard IEC 61850 entitled "communication networks and systems in substations". For non-time critical messages, IEC 61850-8-1 specifies the Manufacturing Message Specification (MMS, ISO/IEC 9506) protocol based on a reduced Open Systems Interconnection (OSI) protocol stack built upon the Transmission Control Protocol (TCP) and Internet Protocol (IP) in the transport and network layer, respectively, and upon Ethernet and/or RS-232C as physical media. For time-critical event-based messages, IEC 61850-8-1 specifies the Generic Object Oriented Substation Events (GOOSE) directly on the Ethernet link layer of the communication stack. For very fast periodically changing signals at the process level such as measured analogue voltages or currents IEC 61850-9-2 specifies the Sampled Value (SV) service, which like GOOSE builds directly on the Ethernet link layer. Hence, the standard defines a format to publish, as multicast messages on an industrial Ethernet, event-based messages and digitized measurement data from current or voltage sensors on the process level as a substitute to traditional copper wiring.

SV or other process data may be transmitted over an inter-bay process bus, making the transmitted information available to neighbouring bays. For cost effective setups such as in medium or low-voltage substations, the inter-bay process bus and the station bus can be merged into one single communication network. In this case, the communication network can be considered an inter-bay process bus that transmits, in addition to the process data, command and/or status related messages otherwise exchanged via a dedicated station bus.

In other words, it is no longer necessary for a protection IED to be hardwired to respective sensors in order to receive the necessary information required for computing a specific protection function. Instead, it is possible for a protection IED to subscribe to a data stream which is available on the system-wide SA communication network or a specific sub-network thereof The process data is digitized, optionally provided with a time-stamp, and published by a process interface, i.e. either a sensor device itself incorporating Analogue to Digital (AD) converter functionality and being directly connected to the communication network, a different protection IED making its local measurements available, or a Merging Unit (MU) merging instantaneous signals of a plurality of connected sensors into a single network message. Furthermore, the possibility of separating the acquisition of measurement data and the processing of the information enables a Station PC to subscribe to the data stream, which in turn brings a couple of new architectural design options for substation automation systems, e.g. related to redundancy or backup protection concepts. For instance, within a Centralized Protection & Control scheme, PC-like devices on a station level would not only serve as a gateway or HMI console, but would also host backup functionality for the bay IED devices, or execute station-wide protection schemes such as busbar protection.

IEC 61850 9-2 traffic is a multicast protocol, allowing the client device to subscribe to specific data streams, and neglect the streams which are not relevant. However, when taking advantage of the possibility to use sensor data in arrangements such as busbar protection functions, or in Station PCs executing backup functionality for a multitude of bays, a significant amount of network traffic needs to be processed by the receiving devices. Without specific hardware support such as Field Programmable Gate Arrays (FPGA), the amount of measurement traffic needed to be processed on the IED devices easily exceeds the available computational power of those devices, and the amount of interrupts generated by the network interface, and the timely processing of the packet information can easily absorb the available CPU capacity of the IED devices and therefore impact the execution of time-critical tasks.

The patent US 6'550'020 claims a data processing system with at least one Integrated Circuit IC containing a central processing unit that includes at least first and second processing cores. Each of the processing cores includes a full set of the components utilized by conventional single-core CPU to fetch, decode, and execute instructions and transfer information to and from other parts of the data processing system such as a global data storage or shared memory. The IC also includes input facilities that receive control input specifying which of the processing cores is to be utilized, e.g. to utilize the second core as a virtual first processing core upon determining that the first core is inactive or defective. To this end, the IC includes configuration logic that dynamically decodes the control input and, in response, selectively controls reception of input signals and transmission of output signals of one or more core of the processing cores in accordance with the control input.

The article "Substation Automation Techniques und Future Trends", by Mohamed Rayees et al., pages 412-416, XP031226537, ISBN: 978-1-4244-1840-4, discusses automation techniques for control, monitoring and protection in medium voltage substations. A standard IED device is described as residing at the lowest bay level of the SA vertical hierarchy and having integrated AD conversion circuits, where the analog signals from the primary process are directly terminated at the IED. The binary inputs of the IED are status and alarms, and the IED is connected to a bay level LAN for exchange of GOOSE messages.

US 2003/231627 A1, EP 1551137 A1, WO 02/084957 A2 all relate to switches/routers in communication networks that have a plurality of network interfaces (ports), but that do not execute protection/control functionality. In particular, US 2003/231627 A1 has packet to parallel processing engines assignment logic depending on packet type and size, EP 1551137 A1 has a single MAC processor per access module and a single network processor, and WO 02/084957 has a management coprocessor in addition to a single digital communications processor.

WO 01/13590 discloses an integrated circuit with single co-processor circuitry for receiving communication packets.

US 2006/0126628 A1 is concerned with performance bottlenecks in systems that employ multiple processing cores to process TCP segments. Specifically, if packets belonging to a same flow are handled by different cores the TCB (Transmission Control Block) of the flow is accessed by different cores, ultimately leading to access contention. Handling a specific flow by only one core eliminates this problem.

### DESCRIPTION OF THE INVENTION

It is therefore an objective of the invention to avoid data processing bottlenecks in Intelligent Electronic Devices (IEDs) for Substation Automation (SA). This objective is achieved by an IED and a method of engineering an SA system according to the claims 1 and 8. Further preferred embodiments are evident from the dependent patent claims.

According to the invention, IEDs for SA, such as bay units or substation PCs, are equipped with an Integrated Circuit with a Central Processing Unit CPU that includes a first processing core dedicated and configured to execute Protection and Control applications, and a second processing core, or network core, dedicated and configured to handle or decode network communication traffic. Hence, Protection and Control functionality in the IEDs is separated or isolated from communication issues, and the former is not impeded by the latter e.g. in case of communication network problems. In particular, the Protection and Control applications can still continue to operate, while the second processing core handling network traffic may see an interrupt flooding.

In a preferred embodiment, the network core performs computationally expensive pre- or post-processing functionality in addition to the 9-2 communication stack. The latter includes receiving 9-2 packets from multiple data sources, decoding the packets, verifying the integrity of the data content and other security aspects as potentially required in the standard IEC 62351. Post-processing operations on behalf of specific protection functions, such as Digital Fourier Transformation (DFT), Root Mean Square (RMS) calculation, Digital filtering, or Peak-to-Peak computation, generally necessitate a lot of computationally expensive floating point operations and iterative calculations.

According to an advantageous variant, the proposed multi-core CPU enables a scalable software architecture that is easy to maintain and to update with new functionality.

Specifically, it allows allocating the decoding of the 9-2 network traffic to a variable number of two or more network cores depending on a few parameters, such as e.g. the number of 9-2 sources or the frequency of samples, i.e. the number of network messages received by the IED per second. Furthermore, the plurality of network cores can be assigned to one or several Network Interface Cards (NIC), the number of which represents, at least for a station PC, an additional degree of flexibility.

According to further refined variants of the invention, the 9-2 multicast network traffic received is distributed or re-routed to the plurality of network cores, either by the single Network Interface Card (NIC), or by a programmable switch that is part of the SA communication network and connected to two or more NICs. The allocation of the network core is most conveniently based on the Source Media Access Code (MAC) address of the individual network messages. Said Source MAC address is easy to parse, i.e. it can be isolated from a received message without knowing or decoding the entire message content. In this context, it is pointed out that the security standard IEC62351 is also transparent, i.e. the entire message content including MAC of a signed message can still be read.

Since the size and extent of the SA system, including the number of sensors, the network infrastructure, and the application functionality, is already specified during engineering of the system, the instantiation of the 9-2 stack and post processing functionality required on each IED for handling the expected amount of 9-2 traffic can be done in a static fashion. Likewise, in case of more than one network core being provided, the data streams which are processed on each core can be configured or pre-allocated during engineering time. Here, a few parameters can be taken into account in order to ensure that the individual processing cores are not overloaded. As an alternative, but less likely, a dynamic (re-)allocation at runtime of streams to network cores, e.g. utilizing load-balancing algorithms taking into account the computation resource requirements of various pre-/post processing tasks, can be applied as well.

As an alternative, hardware-based solutions also provide the possibility to separate and offload the processing and post-processing of network traffic. For instance, Field Programmable Gate Arrays (FPGA) based solutions, which implement the decoding and post-processing logic in hardware and push the data through means like DMA (Direct Memory Access) to the application memory are equivalent solutions to the one proposed in this invention. However, adaptations, such as including e.g. additional logic to handle security enhancements for IEC 61850, or a scaling in the number of supported sources, can require a change in hardware

### BRIEF DESCRIPTION OF THE DRAWINGS

The subject matter of the invention will be explained in more detail in the following text with reference to preferred exemplary embodiments which are illustrated in the attached drawings, which schematically show:
Fig. 1 an IED with a CPU comprising two cores,
Fig.2 an IED with a CPU comprising two network cores, and
Fig. 3 an IED with two network interfaces.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

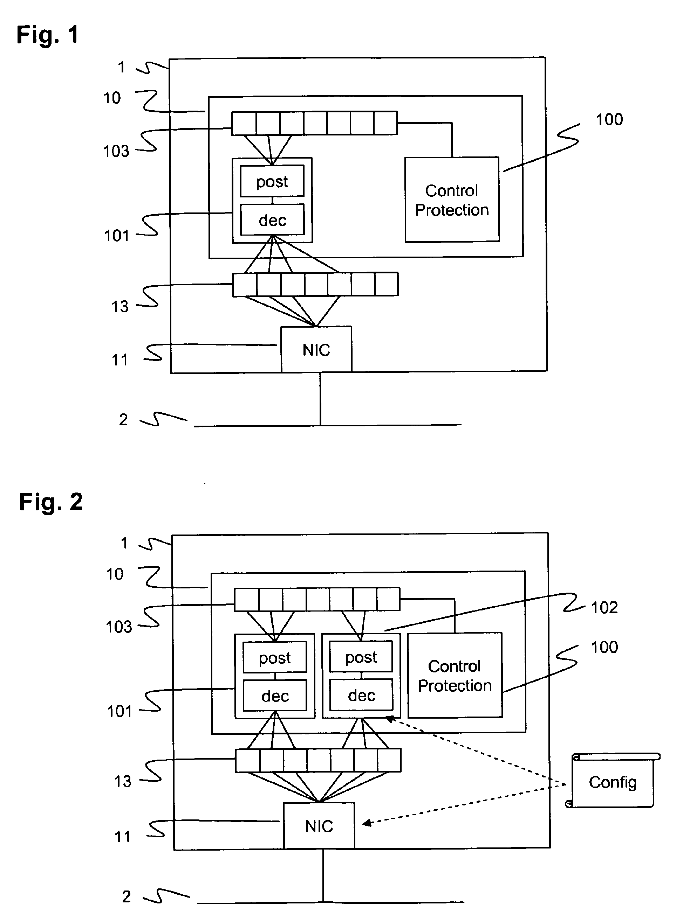

Fig.1 shows some of the basic components of an Intelligent Electronic Device (IED) 1 for Substation Automation (SA), such as a Station PC, a bay unit, or any other embedded device with Protection and Control functionality. The IED 1 has a microprocessor or Central Processing Unit (CPU) 10 with a first processing core 100 dedicated to Protection and Control tasks, and a network core 101 for handling the network traffic received via a Network Interface Card (NIC) 11. The IED 1 is connected, via the NIC 11, to an SA communication network 2, preferably a process bus with IEC 61850 9-2 traffic. Other IEDs (not depicted) of the SA system publish measurement samples as multicast messages on the network 2. The NIC 11 filters the messages according to their destination MAC address and stores the measurement data in shared input memory 13. The 9-2 decoding stack on the network core 101 reads from the shared input memory 13, processes the information, and writes it to CPU core shared memory 103. Post-processing functionality running either on the network core 101 or on a different core can access the processed 9-2 message and perform additional post-processing functionality, the result of which is again stored in the CPU core shared memory 103. Protection and control functions executed on the processing core 100 can access either the decoded raw data or the additionally post-processed data from CPU core shared memory 103. In an exemplary protection mode, the IED monitors the state of a substation or of a part there of and autonomously opens an assigned circuit breaker in case it detects a potentially dangerous situation such as overload.

Multi-core microprocessors feature a single integrated circuit that includes two or more main processing cores sharing the same Random Access Memory (RAM), each of which may be utilized as if it were a separate CPU. Preferably, each of the main cores provides computing power that equals or exceeds that of a conventional high-performance single core processor. In the invention, the network core 101 is dedicated for processing 9-2 traffic (receiving, decoding, post-processing), whereas one or more cores 100 are available for the protection and control applications.

Fig.2 depicts an IED with two network cores 101, 102. In this variant, one network interface 11 receives all traffic, and distributes or forwards, based on configuration data resulting from the SA engineering, received packets to the network cores 101, 102 for further processing. The exact number of network cores depends e.g. on the number of measurement samples to be processed. Basically, an upper limit can be defined per core in terms of messages that it can process per second, depending e.g. on the CPU clock speed, the post-processing functionality executed, and accounting for some safety margin. This limit then can be related to number of sources times the sending frequency per source, giving an estimate on how many cores are required for the 9-2 processing.

Decoding is expensive as the message format is not specified in a format which would allow a simple message-copy-to-memory operation, i.e. the entire message payload has to be parsed, checked for validity, and then copied to suitable memory structures. With standard CPUs (2.0 GHz), up to 80K messages per second can be handled. This may be sufficient for 20 bays of a substation. However, if post-processing is applied, then a lot of additional floating point operations are executed (basically *, div, sqrt), and most often the calculations involve some iterations (history) per message received, e.g. depending on the sampling frequency (1.6 kHz) times the system frequency (50 Hz). It is estimated that this has the potential of reducing the number of messages which can be handled per core by factor of two at least.

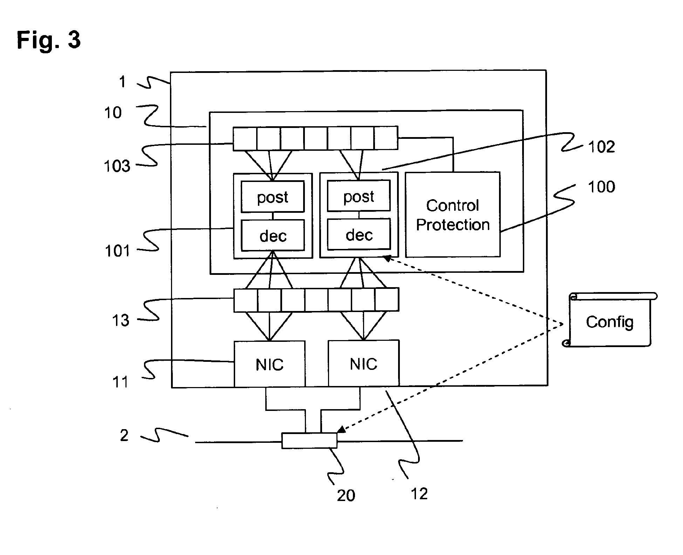

Fig.3 finally shows an IED with two network cores 101, 102 and two network interfaces 11, 12. In this variant each of the cores has a dedicated network interface. Splitting of the network traffic is accomplished by a programmable switch 20 as a node of the SA communication network 2.

It has to be noted that the present invention is not limited to SA, but extends to process automation control in general. Hence, any process automation control device adapted to be connected to a digital process bus and configured to receive and process network messages, further characterized in that the device has a multi-core CPU and that the network messages are handled by one of the cores of the multi-core CPU, may benefit from the advantages as mentioned herein.

### LIST OF DESIGNATIONS

- 1: Intelligent Electronic Device
- 10: microprocessor
- 100: processing core
- 101, 102: network core
- 103: CPU core shared memory
- 11, 12: network interface
- 13: shared input memory
- 2: SA communication network
- 20: Switch

## Claims

1. A method of engineering a Substation Automation SA system with an Intelligent Electronic Device IED comprising a Central Processing Unit CPU (10) that includes network cores (101, 102) configured to receive and process IEC 61850 9-2 network messages over a substation communication network (2) of the SA system and a first processing core (100) configured to execute Protection and Control applications based on IEC 61850 9-2 data handled by the network cores (101, 102), comprising
- defining an upper limit in terms of messages that a network core can process per second,
- relating the upper limit to a number of message sources in the SA system times a sending frequency per source to estimate a number of network cores required for processing a number of network messages received by the IED per second, and
- assigning the number of network cores to the IED.

2. The method of claim 1, comprising
- allocating the number of network messages to the number of network cores based on a source address of the network message.

3. The method of claim 1, wherein the network cores (101, 102) are configured to perform post-processing of the network messages.

4. A Substation Automation SA system with an Intelligent Electronic Device IED comprising a Central Processing Unit CPU (10) that includes network cores (101, 102) configured to receive and process IEC 61850 9-2 network messages over a substation communication network (2) of the SA system and a first processing core (100) configured to execute Protection and Control applications based on IEC 61850 9-2 data handled by the network cores (101, 102),
**characterised in that** the IED comprises a number of network cores required for processing a number of network messages received by the IED per second, said number of network cores being estimated by relating an upper limit in terms of messages that a network core can process per second to a number of message sources in the SA system times a sending frequency per source.

5. The according to claim 4, **characterized in that** the network cores (101, 102) are configured to perform post-processing of the network messages.

6. The substation Automation system substation Automation system according to claim 4, **characterized in that** the is configured to allocate a network message to one of the plurality of network cores based on a source address of the network message.

7. The substation Automation system according to claim 4, **characterized in that** the IED comprises a single network interface (11) adapted to be connected to the substation communication network (2) and configured to allocate a network message to one of the plurality of network cores.

8. The substation Automation system according to claim 4, **characterized in that** the IED comprises a plurality of network interfaces (11, 12) configured to forward a network message to a predefined one of the plurality of network cores, and adapted to be connected to a switch (20) of the substation communication network that is in turn adapted to allocate network messages to one of the network interfaces.

9. The substation Automation system according to claim 4, **characterized in that** the IED is a Station PC, with the first processing core prepared to execute, based on the network messages received, busbar protection functions or backup protection functionality for a multitude of bays.

## Patentansprüche

1. Verfahren zum Entworfen eines Systems der Schaltanlagenautomatisierung SA mit einer intelligenten elektronischen Einrichtung IED mit einer zentralen Verarbeitungseinheit CPU (10), die Netzwerkkerne (101, 102) umfasst, die dafür ausgelegt sind, Netzwerknachrichten des Typs IEC 61850 9-2 über ein Schaltanlagenkommunikationsnetzwerk (2) des SA-Systems zu empfangen und zu verarbeiten, und einen ersten Verarbeitungskern (100) umfasst, der dafür ausgelegt ist, Anwendungen von Schutz und Steuerung auf der Basis von Daten des Typs IEC 61850 9-2 auszuführen, die von den Netzwerkkernen (101, 102) behandelt werden, umfassend:
- Definieren einer Obergrenze im Hinblick auf Nachrichten, die ein Netzwerkkern pro Sekunde verarbeiten kann,
- in Beziehung setzen der Obergrenze mit einer Anzahl von Nachrichtenquellen in dem SA-System mal einer Sendefrequenz pro Quelle, um eine Anzahl von Netzwerkkernen zu schätzen, die zur Verarbeitung einer Anzahl von Netzwerknachrichten, die von der IED pro Sekunde empfangen werden, erforderlich ist, und
- Vergeben der Anzahl von Netzwerkkernen an die IED.

2. Verfahren nach Anspruch 1, umfassend
- Vergeben der Anzahl von Netzwerknachrichten an die Anzahl von Netzwerkkernen auf der Basis einer Quellenadresse der Netzwerknachricht.

3. Verfahren nach Anspruch 1, wobei die Netzwerkkerne (101, 102) dafür ausgelegt sind, Nachverarbeitung der Netzwerknachrichten auszuführen.

4. System der Schaltanlagenautomatisierung SA mit einer intelligenten elektronischen Einrichtung IED mit einer zentralen Verarbeitungseinheit CPU (10), die Netzwerkkerne (101, 102) umfasst, die dafür ausgelegt sind, Netzwerknachrichten des Typs IEC 61850 9-2 über ein Schaltanlagenkommunikationsnetzwerk (2) des SA-Systems zu empfangen und zu verarbeiten, und einen ersten Verarbeitungskern (100) umfasst, der dafür ausgelegt ist, Anwendungen von Schutz und Steuerung auf der Basis von Daten des Typs IEC 61850 9-2 auszuführen, die von den Netzwerkkernen (101, 102) behandelt werden,
**dadurch gekennzeichnet, dass** die IED eine Anzahl von Netzwerkkernen umfasst, die zum Verarbeiten einer Anzahl von Netzwerknachrichten erforderlich ist, die von der IED pro Sekunde empfangen werden, wobei die Anzahl der Netzwerkkerne geschätzt wird durch in Beziehung setzen einer Obergrenze im Hinblick auf Nachrichten, die ein Netzwerkkern pro Sekunde verarbeiten kann, mit einer Anzahl von Nachrichtenquellen in dem SA-System mal einer Sendefrequenz pro Quelle.

5. Schaltanlagenautomatisierungssystem nach Anspruch 4, **dadurch gekennzeichnet, dass** die Netzwerkkerne (101, 102) dafür ausgelegt sind, Nachverarbeitung der Netzwerknachrichten auszuführen.

6. Schaltanlagenautomatisierungssystem nach Anspruch 4, **dadurch gekennzeichnet, dass** die IED dafür ausgelegt ist, eine Netzwerknachricht auf der Basis einer Quellenadresse der Netzwerknachricht an einen der mehreren Netzwerkkerne zu vergeben.

7. Schaltanlagenautomatisierungssystem nach Anspruch 6, **dadurch gekennzeichnet, dass** die IED eine einzige Netzwerkschnittstelle (11) umfasst, die dafür ausgelegt ist, mit dem Schaltanlagenkommunikationsnetzwerk (2) verbunden zu werden, und dafür ausgelegt ist, eine Netzwerknachricht an einen der mehreren Netzwerkkerne zu vergeben.

8. Schaltanlagenautomatisierungssystem nach Anspruch 4, **dadurch gekennzeichnet, dass** die IED mehrere Netzwerkschnittstellen (11, 12) umfasst, die dafür ausgelegt sind, eine Netzwerknachricht zu einem vordefinierten der mehreren Netzwerkkerne weiterzuleiten, und dafür ausgelegt sind, mit einem Switch (20) des Schaltanlagenkommunikationsnetzwerks verbunden zu werden, der seinerseits dafür ausgelegt ist, Netzwerknachrichten an eine der Netzwerkschnittstellen zu vergeben.

9. Schaltanlagenautomatisierungssystem nach Anspruch 4, **dadurch gekennzeichnet, dass** die IED ein Anlagen-PC ist, wobei der erste Verarbeitungskern dafür vorbereitet ist, auf der Basis der empfangenen Netzwerknachrichten Sammelschienen-Schutzfunktionen oder Backup-Schutzfunktionalität für eine Vielzahl von Buchten auszuführen.

## Revendications

1. Procédé de mise au point d'un système d'automatisation de sous-stations SA avec un dispositif électronique intelligent IED comprenant une unité centrale UC (10) qui inclut des coeurs de réseau (101, 102) configurés pour recevoir et traiter des messages de réseau selon la norme CEI 61850 9-2 sur un réseau de communication de sous-stations (2) du système d'automatisation SA, ainsi qu'un premier noyau de traitement (100) configuré pour exécuter des applications de protection et de commande sur la base de données selon la norme CEI 61850 9-2 prises en charge par les coeurs de réseau (101, 102), comprenant :
- la définition d'une limite supérieure en termes de messages que peut traiter un coeur de réseau par seconde,
- le rapprochement de la limite supérieure à un nombre de sources de messages dans le système d'automatisation SA multiplié par une fréquence d'envoi par source afin d'estimer un nombre de cours de réseau requis pour traiter un certain nombre de messages de réseau reçus par le dispositif IED par seconde, et
- l'attribution du nombre de cours de réseau au dispositif IED.

2. Procédé selon la revendication 1, comprenant
- l'allocation du nombre de messages de réseau au nombre de coeurs de réseau sur la base de l'adresse source du message de réseau.

3. Procédé selon la revendication 1, dans lequel les coeurs de réseau (101, 102) sont configurés pour exécuter un post-traitement des messages de réseau.

4. Système d'automatisation de sous-stations SA comportant un dispositif électronique intelligent IED comprenant une unité centrale UC (10) qui inclut des coeurs de réseau (101, 102) configurés pour recevoir et traiter des messages de réseau selon la norme CEI 61850 9-2 sur un réseau de communication de sous-stations (2) du système d'automatisation SA, ainsi qu'un premier coeur de traitement (100) configuré pour exécuter des applications de protection et de commande sur la base de données de la norme CEI 61850 9-2 prises en charge par les coeurs de réseau (101, 102), **caractérisé en ce que** le dispositif IED comprend un certain nombre de coeurs de réseau requis pour traiter un certain nombre de messages de réseau reçus par le dispositif IED par seconde, ledit nombre de coeurs de réseau étant estimé en rapprochant une limite supérieure en termes de messages que peut traiter un coeur de réseau par seconde à un certain nombre de sources de messages dans le système d'automatisation SA multiplié par une fréquence d'envoi par source.

5. Système d'automatisation de sous-stations selon la revendication 4, **caractérisé en ce que** les coeurs de réseau (101, 102) sont configurés pour exécuter un post-traitement des messages de réseau.

6. Système d'automatisation de sous-stations selon la revendication 4, **caractérisé en ce que** le dispositif IED est configuré pour allouer un message de réseau à l'un d'une pluralité de coeurs de réseau sur la base d'une adresse source du message de réseau.

7. Système d'automatisation de sous-stations selon la revendication 6, **caractérisé en ce que** le dispositif IED comprend une unique interface réseau (11) conçue pour être reliée au réseau de communication de sous-stations (2) et configurée pour allouer un message de réseau à l'un de la pluralité de coeurs de réseau.

8. Système d'automatisation de sous-stations selon la revendication 4, **caractérisé en ce que** le dispositif IED comprend une pluralité d'interfaces réseau (11, 12) configurées pour transférer un message de réseau à un coeur prédéfini de la pluralité des coeurs de réseau et conçues pour être reliées à un commutateur (20) du réseau de communication de sous-stations qui, à son tour, est conçu pour allouer des messages de réseau à l'une des interfaces réseau.

9. Système d'automatisation de sous-stations selon la revendication 4, **caractérisé en ce que** le dispositif IED est une station PC, le premier coeur de traitement étant préparé pour exécuter, sur la base des messages de réseau reçus, des fonctions de protection de barre bus ou une fonctionnalité de protection de sauvegarde pour une multitude de baies.
